# EUROPÄISCHE PATENTANMELDUNG

(11) **EP 1 526 625 A2**
(43) Veröffentlichungstag der Anmeldung: **27.04.2005**
(21) Anmeldenummer: 04025070.6
(22) Anmeldetag: 21.10.2004
(51) Int. Cl.: H02H 9/02, H01L 39/20

(54) **Kurzschluss-Strom-Schutzsystem für elektrische DC- und AC-Netze von Schiffen und Offshore-Anlagen**

(30) Priorität: 22.10.2003 DE 10349552
(71) Anmelder: SIEMENS AKTIENGESELLSCHAFT, 80333 München (DE)
(72) Erfinder: Ahlf, Gerd, 91369 Wiesenthau (DE); Kraemer, Hans-Peter, Dr., 91058 Erlangen (DE); Wacker, Bernd, 91074 Herzogenaurach (DE)

(57) **Zusammenfassung**

Kurzschluss-Strom-Schutzsystem für elektrische DC- und AC-Netze von Schiffen und Offshore-Anlagen,

Ein Kurzschluss-Strom-Schutzsystem (40) für elektrische DC-und AC-Netze von Schiffen und Offshore-Anlagen weist
- einen von dem Kurzschlusstrom durchflossenen Hochtemperatur-Supraleiter (HTS)-Strombegrenzer (1),
- einen Kryostat zur Aufnahme und Kühlung des HTS-Strombegrenzers (1) und
- einen Refrigerator zur Rekondensation von in dem Kryostat vorhandenen gasförmigem Kältemittel auf.

Erfindungsgemäß ist das Kurzschluss-Strom-Schutzsystem hinsichtlich Funktion und Struktur für Schiffe und/oder Offshore-Plattformen tauglich ausgebildet und weist Mittel zur elektrischen, verfahrenstechnischen und mechanischen Integration in die Schiffe und Offshore-Anlagen auf.

## Beschreibung

Kurzschluss-Strom-Schutzsystem für elektrische DC- und AC-Netze von Schiffen und Offshore-Anlagen

Die Erfindung betrifft ein Kurzschluss-Strom-Schutzsystem für elektrische DC- und AC-Netze von Schiffen und Offshore-Anlagen; ein derartiges System ist z.B. durch die WO 02/15361 A1 bekannt.

Als Bordnetze und elektrische Fahranlagen ausgebildete DCund AC-Netze von Schiffen (wobei unter Schiffen sowohl Überals auch Unterwasserschiffe verstanden werden) und Offshore-Anlagen sind dem Charakter nach Inselnetze und unterliegen in ihrem Betrieb besonderen Anforderungen.

DC-Netze bzw. Gleichstromanlagen sind beispielsweise in Unterwasserschiffen weit verbreitet. Bei den bisher gelieferten Gleichstromanlagen und geplanten neuen Gleichstromanlagen für Unterwasserschiffe sind prospektive Summenkurzschlussströme von ca. 100 bis max. 320 kA möglich, was im Kurzschlussfall zu einer hohen thermischen und infolge hoher mechanischer Kräfte durch Stoßströme zu einer erheblichen dynamischen Belastung der gesamten Gleichstromanlage führt.

AC-Netze bzw. Drehstromanlagen sind als elektrische Fahranlagen in Überwasserschiffen weit verbreitet. In derartigen Überwasserschiffen treten insbesondere bei großen Bordnetzleistungen hohe Kurzschlussleistungen auf.

Die WO 02/15361 A1 offenbart ein Kurzsschluss-Strom-Schutzsysten mit einem von dem Kurzschluss-Strom durchflossenen Hochtemperatur-Supraleiter (HTS)-Strombegrenzer, einem Kryostaten zur Aufnahme und Kühlung des HTS-Strombegrenzers und einem Refrigerator zur Rekondensation von in dem Kryostat vorhandenen gasförmigem Kältemittel. Der HTS-Strombegrenzer bewirkt, dass der Kurzsschluss-Strom bereits im ersten Stromanstieg begrenzt wird. Danach kann eine Abschaltung des Kurzschluss-Stromes, beispielsweise durch einen Leistungsschalter, erfolgen. Nach dem Abschalten des Kurzschlusses und einer kurzen Abkühlzeit kann der HTS-Strombegrenzer wieder in den betroffenen Stromkreis geschaltet werden.

Kurzsschluss-Strom-Schutzsysteme der vorgenannten Art wurden bereits verwirklicht und der Öffentlichkeit vorgestellt. Aufgrund der insbesondere in DC- und AC-Netzen von Schiffen und Offshore-Plattformen vorkommenden hohen Kurzschluss-Ströme und der hohen Anforderungen an geringe Größe und Gewicht, Betriebs- und Eigensicherheit, Montage- und Wartungsfreundlichkeit dieser Kurzsschluss-Strom-Schutzsysteme in Schiffen und Offshore-Plattformen erfolgte für solche Anlagen eine Umsetzung in die Betriebs-Praxis jedoch bisher nicht. Die Vorteile gegenüber konventionellen Kurzschluss-Strom-Schutzsystemen, z.B. mit einer Sollschmelzstelle, konnten deshalb noch nicht zum Tragen kommen.

Es ist deshalb Aufgabe vorliegender Erfindung, ein Kurzschluss-Strom-Schutzsystem der eingangs genannten Art anzugeben, das praxisgerecht ausgestaltet ist und in elektrischen DC- und AC-Netzen von Schiffen und Offshore-Anlagen eingesetzt werden kann.

Die Lösung dieser Aufgabe gelingt erfindungsgemäß durch die Lehre des Patentanspruchs 1. Vorteilhafte Ausgestaltungen der Erfindung sind Gegenstand der Unteransprüche.

Aufgrund der hinsichtlich Funktion und Struktur für Schiffe und Offshore-Plattformen tauglichen Ausbildung des Kurzschluss-Strom-Schutzsystems kann die Umsetzung des Kurzschluss-Strom-Schutz-Systems in die Betriebspraxis von Schiffs- und Offshore-Plattformen ermöglicht werden und es können die Vorteile gegenüber konventionellen System ohne HTS-Strombegrenzer ausgeschöpft werden.

Durch die Mittel zur elektrischen Integration kann die Einbindung des Schutzsystems in einen potentiell kurzschlussbehafteten Stromkreis des AC- oder DC-Netzes eines Schiffes oder einer Offshore-Plattform sowie die Einbindung in Steuerungs-, Automations-, Überwachungs- und Diagnosesysteme in diesen Anlagen erfolgen. Durch die Mittel zur mechanischen Integration kann eine einfache und schnelle Montage des Schutzsystems in den Anlagen ermöglicht werden. Durch die Mittel zur verfahrenstechnischen Integration kann ein Zugriff auf in der Anlage bereits vorhandene Ressourcen (z.B. Strom, Wasser) anderer Systeme erfolgen, so dass diese Ressourcen nicht systemintern gelagert oder erzeugt und bereitgestellt werden müssen. Das Schutzsystem kann somit kostengünstiger und hinsichtlich Größe und Gewicht kleiner gehalten werden.

Die Montage und Prüfung des Systems kann dadurch mit geringem Aufwand durchgeführt werden, dass das System als elektrisch, verfahrenstechnisch und mechanisch in Schiffe und/oder Offshore- Plattformen integrierbare Vormontage-Baueinheit ausgebildet ist. Die Vormontage und Prüfung kann somit außerhalb des Schiffes oder der Offshore-Plattform durchgeführt werden und muss nicht unter den an Bord von Schiffen und Offshore-Plattformen vorliegenden beengten Platzverhältnissen erfolgen. Es werden somit Montage- und Prüfungsfehler vermieden und eine hohe Verfügbarkeit des Systems erzielt.

Eine besonders einfache und schnelle Montage im Schiff oder in der Offshore-Anlage ist möglich, wenn die Vormontage-Baueinheit einen Schaltschrank oder eine Schalttafel umfasst, in dem bzw. der der Hochtemperatur-Supraleiter (HTS)-Strombegrenzer, der Kryostat und der Refrigerator angeordnet sind.

Bevorzugt weist das Schutzsystem eine auf die Kurzsschluss-Strom-Begrenzung in elektrischen DC- und AC-Netzen von Schiffen und Offshore-Plattformen optimierte Strom-Zeit-Charakteristik auf.

Gemäß einer bsonders vorteilhaften Ausgestaltung der Erfindung begrenzt der Hochtemperatur-Supraleiter (HTS)-Strombegrenzer hierbei den Kurzschlussstrom innerhalb einer Millisekunde auf maximal den dreifachen Nennstrom bzw. Dauerbemessungsstrom des Strombegrenzers, unabhängig von der Höhe des unbeeinflussten Kurzschlusstromes. Hierdurch können im Kurzschlussfall mechanische und thermische Belastungen der Komponenten des AC- oder DC-Netzes des Schiffes oder der Offshore-Anlage klein gehalten werden. Außerdem kann der Betrieb von fehlerfreien Teilnetzen aufrechterhalten werden, wodurch z.B. die Manövrierbarkeit des Schiffes auch im Kurzschlussfall gewährleistet werden kann.

Bevorzugt weist der Hochtemperatur-Supraleiter (HTS)-Strombegrenzer als Hochtemperatur-Supraleiter eine Dünnschicht aus Yttrium Barium Copper Oxide (YBCO) auf. Die Dünnschicht kann z.B. auf einem Bandleiter oder einem Plattenleiter aufgebracht sein.

Auf Basis des Dünnschichtmaterials lässt sich eine äußerst schnelle Begrenzung des Kurzschlusstromes (z.B. innerhalb einer Millisekunde auf maximal den dreifachen Nennstrom bzw. Dauerbemessungsstrom) erreichen, wodurch es besonders für den Schiff- und Ofsshore-Anlageneinsatz geeignet ist. Mit sogenannten Bulk-Supraleitern, welche nicht als Dünnschicht sondern als Massivmaterial eingesetzt werde, sind derartig hohe Begrenzungsgeschwindigkeiten nicht möglich.

Außerdem kann wegen der äußerst geringen Wärmekapazität der Dünnschichten eine schnelle Rückkühlung in weniger als 2s erreicht werden. Auch wegen der somit zeitlich gesehen schnellen Wiederzuschaltbarkeit eignet sich ein HTS-Strombegrenzer auf Dünnschichtbasis besonders für die Erreichung einer hohen Versorgungszuverlässigkeit auf Schiffen und Offshore-Plattformen.

Weitere Vorteile der Erfindung, nähere Einzelheiten sowie vorteilhafte Ausgestaltungen der Erfindung sind aus den Zeichnungen und der Zeichnungsbeschreibung zu entnehmen.

Im Einzelnen zeigen in beispielhafter Ausführung:
- FIG 1:: den Schaltzustand eines HTS-Strombegrenzers im Normalbetrieb
- FIG 2:: den Schaltzustand eines HTS-Strombegrenzers im Kurzschlussfall
- FIG 3:: eine Systemstruktur und Schnittstellen eines Kurzschluss-Strom-Schutzsystems
- FIG 4:: eine schematische Darstellung eines Prüffeldaufbaus zur Prüfung eines HTS-Strombegrenzers
- FIG 5:: Stromeinstellungsmessungen für unterschiedliche Kurzschluss-Ströme
- FIG 6:: Strom-, Spannungs- und Widerstandsverlauf an dem HTS-Strombegrenzer eines Kurzschluss-Strom-Schutzsystems während eines typischen Begrenzungsvorganges
- FIG 7:: Strom-, Spannungs- und Widerstandsverlauf an dem HTS-Strombegrenzer eines Kurzschluss-Strom-Schutzsystems zu Beginn des Begrenzungsvorgangs
- FIG 8:: Strom- und Spannungsverlauf beim Ansprechen einer Sollschmelzstelle gemäß Stand der Technik

Die Supraleitung eröffnet völlig neue Anwendungsmöglichkeiten z.B. als Hochtemperatur-Supraleiter-Strombegrenzer (HTS-Strombegrenzer). Überschreitet der Strom einen konstruktiv festgelegten Wert, erreicht ein supraleitendes Element innerhalb von deutlich weniger als 1 ms den normalleitenden Zustand. Die Eigenschaft des Materials, vom supraleitenden in den normalleitenden Zustand zu kippen, bezeichnet man als den so genannten "Quench" und ist nur für die Anwendung in einem Strombegrenzer interessant. Im supraleitenden Zustand weist der HTS- Strombegrenzer nahezu keinen messbaren Widerstand auf. Die Strombegrenzung erfolgt durch Widerstandserhöhung und wird durch den durchfließenden (Über-)Strom hervorgerufen, welcher über dem sogenannten kritischen Strom des HTS-Strombegrenzers liegen muss. Der HTS- Strombegrenzer arbeitet als Primärauslöser und benötigt kein externes Triggersignal zum Ansprechen (Erhöhung des Widerstandes) oder Auslösen (Quench). Die Auslösung durch ein externes Magnetfeld spielt praktisch für die Anwendung keine Rolle, da die aufzuwendenden Magnetfelder viel zu groß sein müssten.

Ein Einsatzfall für HTS- Strombegrenzer ist in Schaltanlagen gegeben, wenn mögliche Kurzschlussströme in die Nähe der zulässigen Abschaltströme der Leistungsschalter kommen oder gar darüber hinausgehen können.

Ist in dem Kreis des Kurzschlusses ein HTS- Strombegrenzer eingebaut, ändert dieser bei Überschreiten seines typabhängigen Ansprechstroms seinen Widerstand von Null auf den (Auslegungs-) Wert, der ein sicheres Beherrschen des Kurzschlusses durch die Schaltanlage ermöglicht. Das normalleitende Widerstandselement ist nur für kurzzeitigen Betrieb bemessen; daher muss nach Ansprechen des HTS- Strombegrenzers der Kurzschlussstrom von der Schaltanlage unterbrochen werden, um das Widerstandselement vor thermischer Überlastung zu schützen.

Bevorzugt kann der HTS-Strombegrenzer in Inselnetzen Anwendung finden, insbesondere in elektrischen AC- und DC- Netzen von Schiffen und Offshore-Plattformen. Speziell im Gleichspannungsnetz von U-Booten führten Leistungssteigerungen dazu, dass für einige denkbare Kurzschlussfälle der Aufbau der Schaltanlage angepasst und sogenannte Sollschmelzstellen vorgesehen wurden. Ein Kurzschluss wird mit Ansprechen einer Sollschmelzstelle beherrschbar, führt jedoch zu deren Ausfall (ähnlich einer Schmelzsicherung) und die Schaltanlage ist erst nach Einbau einer neuen Sollschmelzstelle wieder voll verfügbar.

Bei Einsatz eines HTS-Strombegrenzers ergibt sich der Vorteil, dass die Schaltanlage nach Beseitigung des Kurzschlusses und einer kurzen Abkühlzeit (ca. 2 Sek.) zur Erlangung der Supraleitung wieder voll betriebsbereit ist.

Ein supraleitender Strombegrenzer verbessert die elektrischen Netzverhältnisse insbesondere in Inselnetzen, wie sie z.B. an Bord von Schiffen und Offshore-Plattformen vorliegen, relevant. Der Strombegrenzer muss jedoch in seine Umgebung eingepasst werden. Hierbei geht es um die Systemeinbindung
- Elektrisch
- Verfahrenstechnisch
- Mechanisch

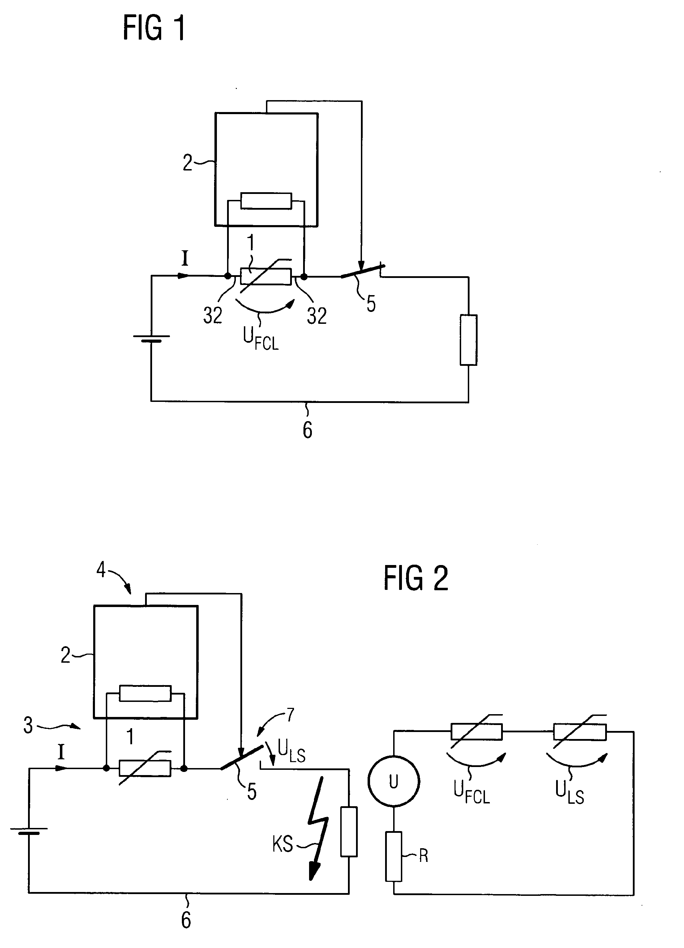

Der HTS-Strombegrenzer realisiert seine Funktion mit Hilfe eines oder mehrerer HTS-Elemente. Bei einem HTS-Element handelt es sich z.B. um einen Plattenleiter oder Bandleiter mit einer aufgebrachten Dünnschicht aus YBCO-Material. Derartige HTS-Elemente können zu HTS-Modulen zusammengeschaltet werden, um die Anforderungen an den HTS-Strombegrenzer aus elektrischer Sicht (z.B. Bemessungsspannung, Bemessungsstrom) zu erreichen. Bei den HTS-Elementen handelt es sich somit um die Schlüsselkomponenten des Systems. Weitere Komponenten zur Erfüllung der Aufgabe sind:
- Kryostat mit Deckel
- Einbauten im Kryostat mit konstruktiver Halterung des Modules und Sensorik
- Stromzuführungen an das HTS-Modul
- Refrigerator bestehend aus Kaltkopf und Kompressor
   a) Elektrische Funktion des Schutzsystems FIG 1 zeigt einen im Normalbetrieb von einem Betriebsstrom I durchflossenen Strombegrenzer 1. Ein Spannungsabfall U_{FCL} über dem Supraleiter des Strombegrenzers 1 ist nicht meßbar. Über den Stromzuführungen 32 ist ein geringfügiger Spannungsabfall meßbar, welcher durch die Cu-Anschlüsse sowie die Kontaktwiderstände auftritt.
      Der Schaltzustand des Strombegrenzers 1 bei einem Kurzschluss KS im Stromkreis 6 und ein Ersatzschaltbild sind in FIG 2 dargestellt. Bei Ansteigen des Betriebsstromes durch das HTS-Modul über den Wert des Auslösestromes erfolgt ein sprunghafter Anstieg des Widerstandes des Supraleiters (Quench). Dabei fällt sprungartig eine Spannung UFCL über dem Strombegrenzer 1 ab. Dieses Ansteigen der Spannung UFCL über dem Strombegrenzer 1 wird mittels einem nicht näher dargestellten Spannungsteiler an einen einstellbaren Eingang 3 eines Impulsauslösers (Kondensatorauslöser)2 gegeben. Die Signalverarbeitung im Impulsauslöser 2 erfolgt über eine optische Schnittstelle und dauert weniger als 0,5ms. Der Impulsauslöserausgang 4 wird betätigt und steuert die (parallel geschalteten) Auslösemagnete 7 (Spannungsauslöser und Verriegelungsmagnet) des Leistungsschalters 5 an. Der Leistungsschalter 5 öffnet den Stromkreis 6 nach der Schaltereigenzeit.
   b) Auswahl und Funktion der Hilfseinrichtungen
      ba) Kryostat
         Es wird ein Kryostat verwendet.
         Der Kryostat ist ein doppelzylindrischer amagnetischer Behälter. Zwischen den beiden Zylindern, welche am Zylinderkopf flanschartig verschraubt sind, wird ein Vakuum (10-6 bar) angelegt. Das Vakuum wird durch eine Vakuumpumpe erzeugt. Der Behälter ist vakuumdicht auszuführen. Daher ist das Vakuum, einmal erzeugt, dauerbeständig. Für den Fall, daß das Vakuum dennoch nachgepumpt werden muss, ist an der Kryostataußenwand ein Eckventil vorgesehen, an welches ein mobiler Vakuumpumpstand angeschlossen werden kann. Die Aufrechterhaltung des Unterdrucks ist für die eigentliche Funktion des Strombegrenzers ohne Belang. Das Nachpumpen kann daher auch erfolgen, wenn der Strombegrenzer unter Spannung steht. Die Aufrechterhaltung des Vakuums ist wichtig, damit die Verluste im Kalten ausreichend niedrig bleiben, so daß der Refrigerator jederzeit die verdampfte Menge Stickstoff im geschlossenen Kryostat rekondensieren kann.
      bb)Kryostatdeckel
         Der Kryostatdeckel enthält alle notwendigen dichten Durchführungen für folgende Komponenten:
         - Stromzuführungen
            Es werden Stromzuführungen verwendet, welche dauerhaft einen Strom in Höhe des Dauer-Bemessungsstromes tragen können. Diese Durchführungen sind thermisch optimiert.
         - Heber
            Zur Befüllung des Kryostaten mit Flüssigstickstoff.
         - Druckentlastung
            Der Kryostat wird geschlossen betrieben. Bei Ausfall des Refrigerators wird sich im Kryostat ein Überdruck wegen des verdampfenden Stickstoffes aufbauen. Hierfür wird ein Überdruckventil sowie als Sicherheit (Back-up-Schutz) eine Berstscheibe vorgesehen. Das Überdruckventil öffnet bei 0,5 bar Überdruck. Die Berstscheibe aus Stahlblech wird mittels Flansch auf dem Deckel aufgebaut. Der zulässige Überdruck, bei dem die Berstscheibe aufreißen wird, ist 0,6 bar.
         - Badheizer
            Der Badheizer hat den Zweck, daß der Kryostat schneller aufgewärmt werden kann, z. B. für Reparaturen im Inneren des Kryostaten. Die ist insbesondere in Schiffen und Offshore-Anlagen von Bedeutung, in denen Stillstandszeiten aufgrund von Reparaturarbeiten möglichst klein gehalten werden müssen. Dazu ist auf einem Stahlblech eine Heizfolie aufgeklebt, welche mit Netzspannung betrieben wird. Der Strom wird vom Widerstand der Folie bestimmt, um normalerweise vorhandene Absicherungen verwenden zu können. Die Stromzuführung erfolgt über ein Kabel, welches an den im Schaltschrank befindlichen Regler gesteckt werden kann. Die Steckverbindung wird nur bei Bedarf gesteckt.
         - Standsonde (Füllstand)
            Die Standsonde hat den Zweck, den Füllstand des Flüssigstickstoffes im Kryostaten zu überwachen. Gleichzeitig kann beim Befüllen über ein Magnetventil die Zufuhr an Flüssigstickstoff gestoppt werden.
         - Meßkabeldurchführung
            Die Durchführung dient für zusätzliche Kabel, welche z. B. für Temperaturfühler und Kaltkopf-Gegenheizung notwendig sind.
         - Licht
            Mit einer externen Kamera kann das Kryostatinnere beobachtet werden. Dafür ist ausreichend Licht notwendig, welches über einen Lichtwellenleiter (externe Lichtquelle) optisch in das Kryostatinnere geführt wird. Hierdurch kann der Betriebszustand des HTS-Strombegrenzers überwacht, bei Abnormalitäten sofort Gegenmaßnahmen ergriffen und somit eine hohe Verfügbarkeit des HTS-Strombegrenzers gewährleistet werden.
         - Kamera
            Um eine vertikale Diagnose durchführen zu können, ist eine s/w Fingerkamera (CCD) vorgesehen, welche extern über den Schaltschrank versorgt wird. Es kann ein handelsüblicher Monitor mit Videoeingang angeschlossen werden. Zusätzliche Durchführungen sind als Reserve angebracht.
         - Refrigerator
            Der Refrigerator arbeitet nach dem Prinzip von GiffordMc-Mahon und hat eine Kälteleistung von 300W@77K (kommerziell erhältlich).

         Prinzipiell sind andere bekannte Verfahren möglich, wie z. B. Puls-Tube, nach dem Stirling-Prinzip oder Gemischkälteanlage. Die elektrische Anschlußleistung ist 7kW 400V 3∼AC und der Bedarf an Wasser zur Rückkühlung des Ölkompressors ist 270 l/h bei 25°C Vorlauftemperatur. Der Refrigerator besteht aus einem Kaltkopf und einen Kompressor. Der Kompressor erzeugt den notwendigen Druck des Arbeitsmediums (Helium). Das Arbeitsmedium (Vor- und Rücklauf) wird über flexible Druckleitungen an den Kaltkopf herangeführt. Der Refrigerator selbst ist nicht regelbar.
         Die Regelung des Refrigerators erfolgt indirekt mittels Gegenheizung, welche am Kondensator des Kaltkopfes angebracht wird. Die Gegenheizung wird durch ein Temperaturregelgerät ein- und ausgeschaltet, so daß die Temperatur des flüssigen Stickstoffes bei 77K bei Umgebungsdruck liegt. Der erforderliche Temperatursensor ist ein Pt100 , welcher sich im Flüssigstickstoff befindet. Ein weiterer Pt100 wird am Kondensator angebracht, um die Temperatur des Kaltkopfes prüfen zu können. Alternative ist auch der Druck als Regelkriterium einzubeziehen.
         Der notwendige Kompressor ist jedoch vorzugshalber ein ölfreier Linearkompressor, der einen geringen Wartungsbedarf aufweist, was insbesondere für Schiffe und Offshore-Anlagen von Bedeutung ist.
   c) Schnittstellen
      Die für die Integration des Systems in ein Schiff oder eine Offshore-Plattform relevanten Schnittstellen und Integrationsmittel sind im folgenden aufgeführt:
      ca) Elektrische Schnittstellen
         - Sammelschiene
            Die Stromzuführungen am Kryostatdeckel werden über Leitungen an den Schaltschrank angeschlossen.
         - Anschluß Hilfsspannung 400V 3∼
         - Anschluß Signale siehe Tabelle 1 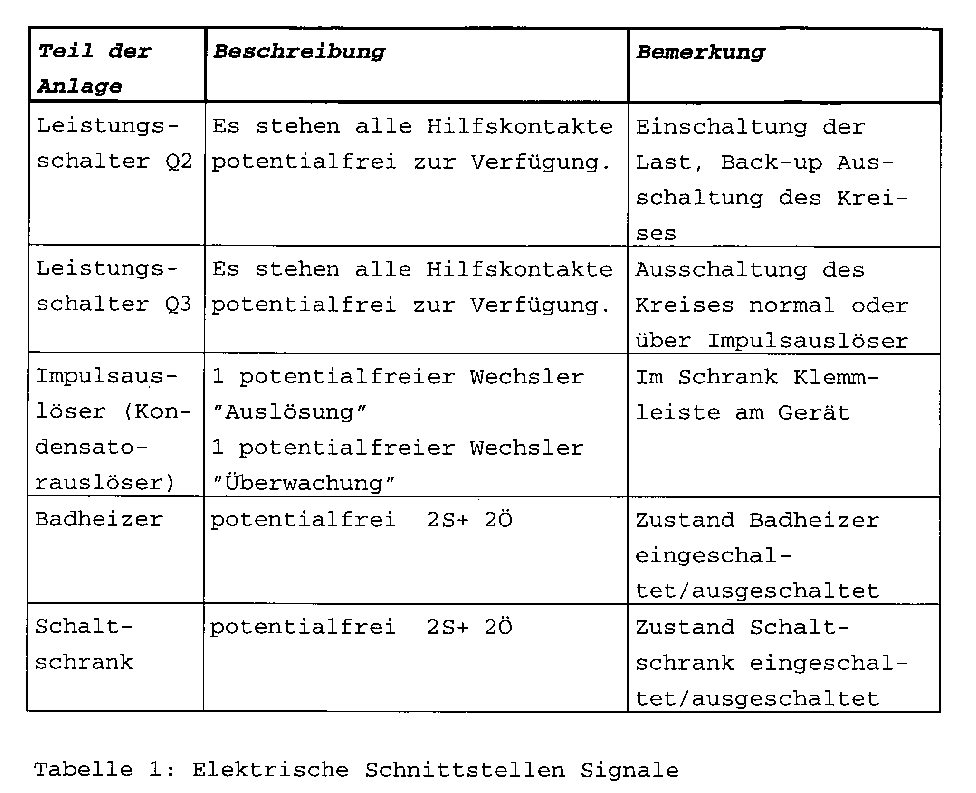
      cb) Mechanische und verfahrenstechnische Schnittstellen
         Mechanische und verfahrenstechnische Schnittstellen und zugehörige Integrationsmittel sind in Tab. 2 aufgeführt.

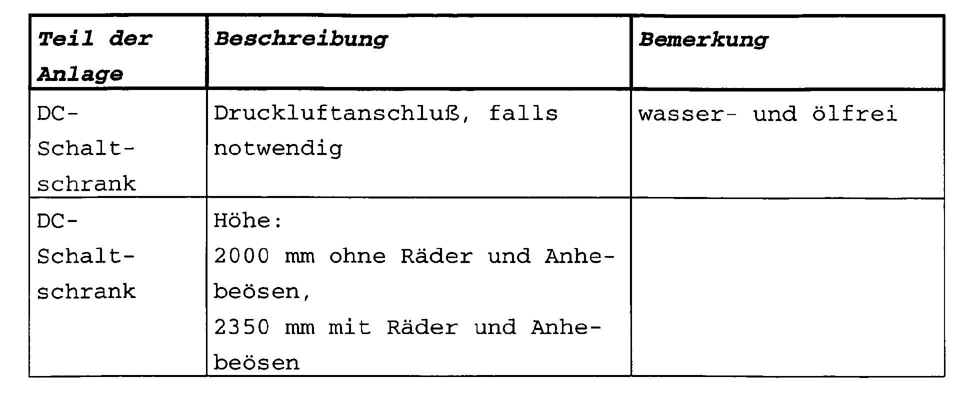

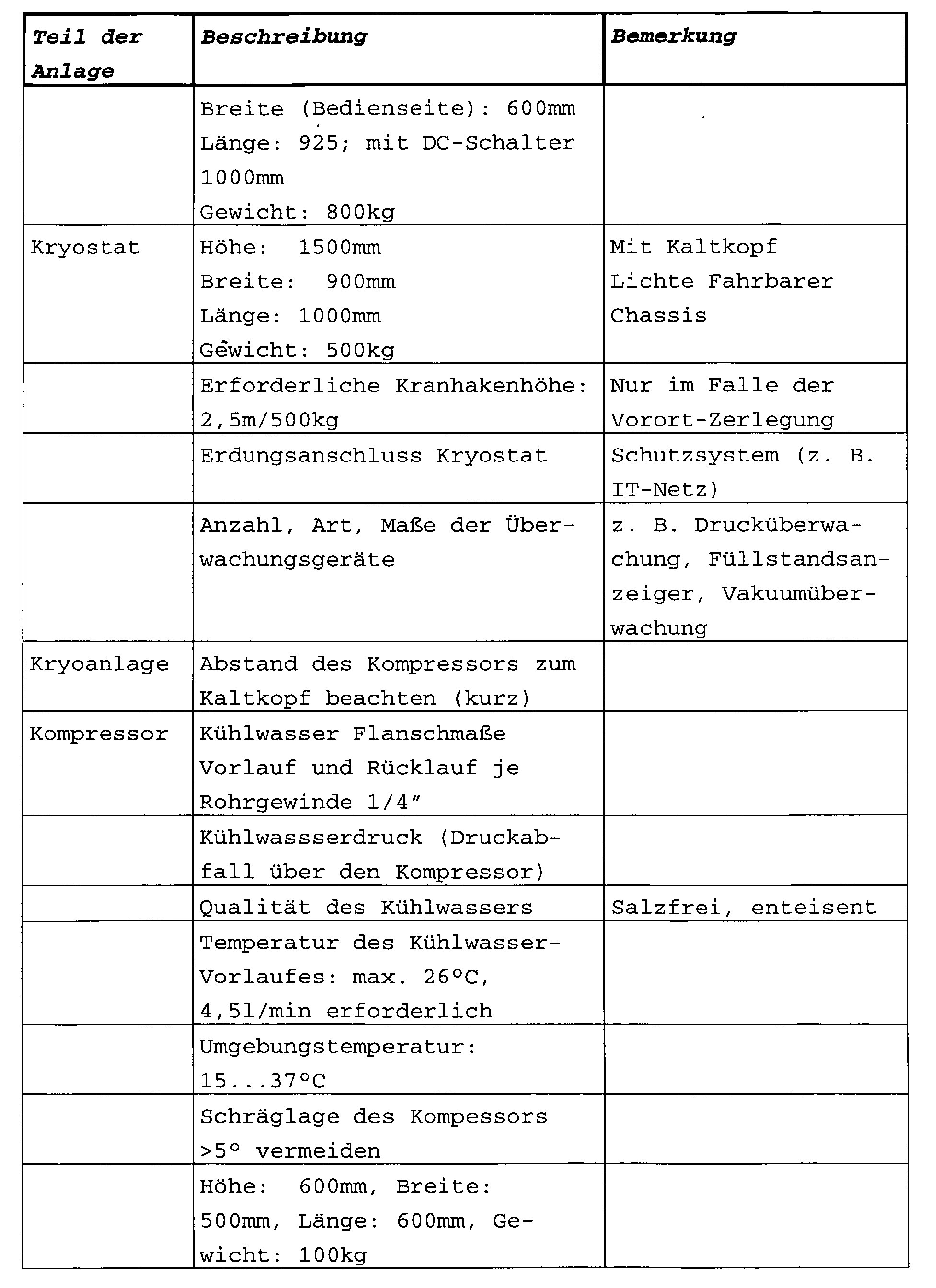

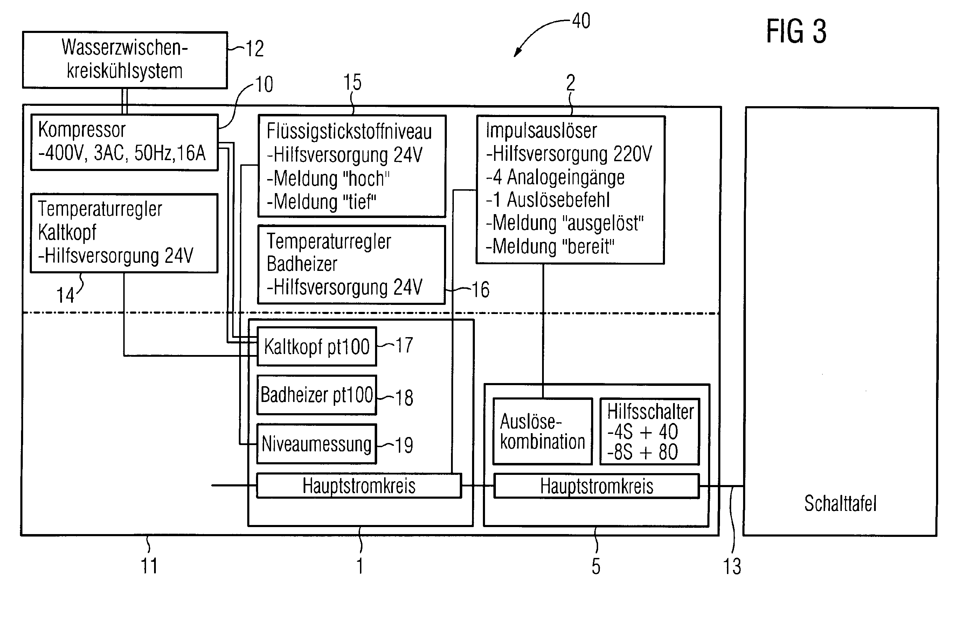

      Fig 3 zeigt in prinzipieller Darstellung eine Systemstruktur und Schnittstellen eines Kurzschluss-Strom-Schutzsystems 40. Der HTS-Strombegrenzer 1 mit seinem Kryostaten, der Leistungsschalter 5, der Refrigerator bestehend aus einem Kaltkopf 17 und einem Kompressor 10, eine Einrichtung 19 zur Niveaumessung des flüssigen Kältemittels in dem Kryostaten sowie ein Badheizer 18 sind in einer Schalttafel oder einem Schaltschrank 11 angeordnet.
      Zusätzlich sind in der Schalttafel bzw. dem Schaltschrank 11 ein Temperaturregler 14 für den Kaltkopf 17, ein Temperaturregler 16 für den Badheizer 18, ein Regler 15 für das Niveau des Kältemittels (z.B. Flüssigstickstoff) sowie für die Ansteuerung des Leistungsschalters 5 notwendige Komponenten (z.B. ein Impulsauslöser 2) angeordnet. Der Kaltkopf 17 und der Badheizer 18 weisen zur Messung der Temperatur des Kältemittels geeignete Temperatursensoren (z.B. pt100-Elemente) auf.
      Bevorzugt stellt die Schalttafel bzw. der Schaltschrank 11 mit den darin montierten Komponenten eine elektrisch, verfahrenstechnisch und mechanisch in Schiffe und/oder Offshore-Plattformen integrierbare Vormontage-Baueinheit dar. Der Leistungsschalter 5 und der HTS-Strombegrenzer 1 sind hierbei in einen Stromkreis 13 des Schiffes oder der Offshore-Plattform integrierbar. Der Kaltkopf 17 des Strombegrenzers 1 wird durch den ebenfalls in der Schalttafel bzw. dem Schaltschrank 11 angeordneten Kompressor 10 versorgt, welcher wiederum an ein Wasserzwischenkreiskühlsystem 12 des Schiffes oder der Offshore-Plattform anschließbar ist. Da sowohl der Kompressor 10 als auch der Kaltkopfe 17 in der Schalttafel bzw. dem Schaltschrank 11 angeordnet sind, können die Verbindungsleitungen zwischen beiden Komponenten kurz gehalten werden. Damit können Druckverluste auf diesen Verbindungsleitungen klein gehalten und somit ein guter Wirkungsrad des Kurzschluss-Strom-Schutzsystems 40 erzielt werden.
   d) Schaltverhalten des HTS-Strombegrenzers in Kurzschluss-Strom-Schutzsystemen für elektrische DC- und AC-Netze von Über- und Unterwasserschiffen und Offshore-Anlagen.

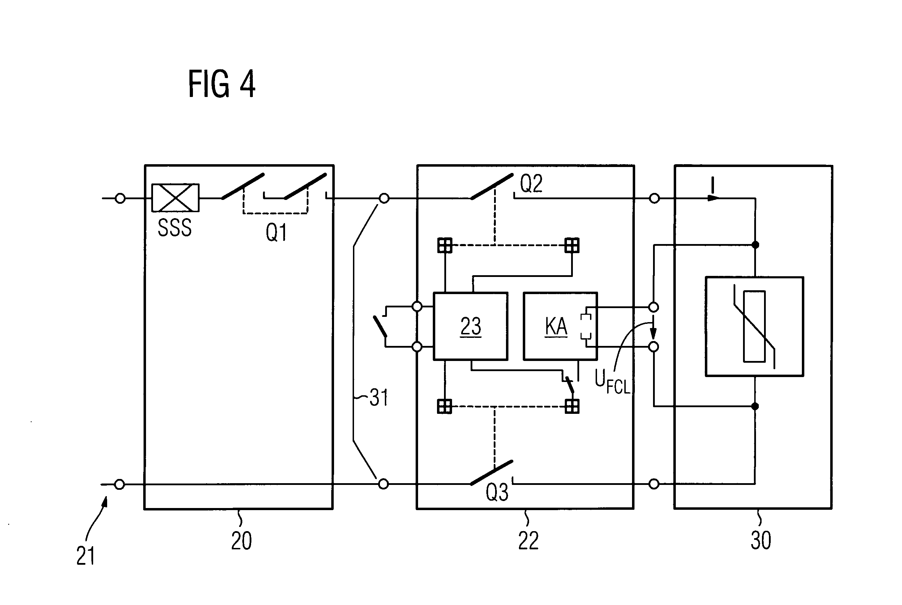

FIG 4 zeigt in schematischer Darstellung einen Prüffeldaufbau zur Prüfung und Vergleich des Schaltverhaltens eines in Kurschluss-Strom-Schutzsystemene für Schiffe und Offshore-Plattformen verwendbaren HTS-Strombegrenzers 30 und einer aus dem Stand der Technik bekannten Sollschmelzstelle SSS.

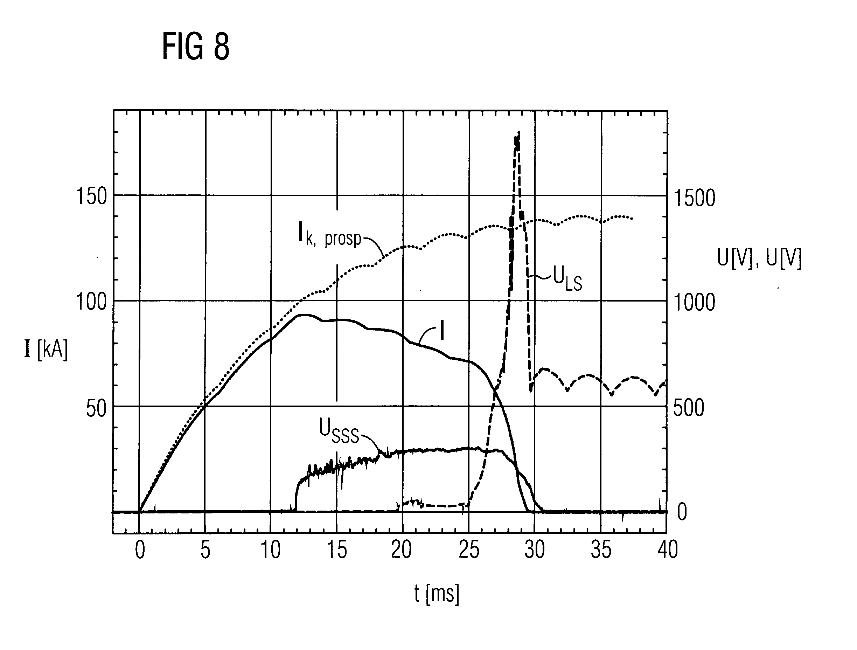

Ein Prüfgerüst 20 mit einem Leistungsschalter Q1 und einer Sollschmelzstelle SSS dient zur Sicherheit, falls der Strombegrenzer 30 nicht wie gewünscht ansprechen sollte. Außerdem soll zum Vergleich die Funktion der Sollschmelzstelle SSS demonstriert werden (siehe FIG 8).

Ein Schaltschrank 22 enthält im Wesentlichen zwei Leistungsschalter Q2 und Q3, eine Steuerung 23 sowie einen Impulsauslöser (Kondensatorauslöser) KA zum schnellen Ausschalten des Leistungsschalters Q3. Die Prüfung wird über die Steuerung 23 gesteuert. Dabei werden die Leistungsschalter Q2 und Q3 zu vorgegebenen Zeitpunkten geschlossen und geöffnet und somit auch die Kurzschlussdauer festgelegt.

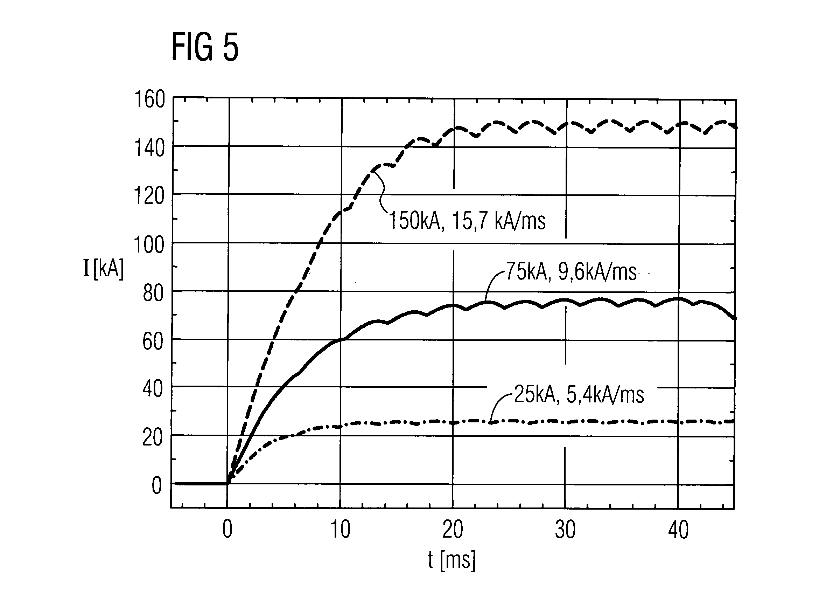

Abgesehen von den Vorversuchen zur Stromeinstellung (siehe FIG 5) ist der Leistungsschalter Q2 immer geschlossen und der Leistungsschalter Q3 wird über den Kondensatorauslöser KA ausgeschaltet, wenn die Spannung UFCL am Strombegrenzer 30 eine Spannungsschwelle überschreitet. Bei allen Versuchen wird die Spannung am Ausgang des Kondensatorauslöser KA mitgemessen und das korrekte Ansprechen des Kondensatorauslösers KA überprüft.

Der Strom I wird über einen im Schaltschrank 22 eingebauten Stromwandler sowie die Spannungen am HTS-Strombegrenzer UFCL, am Leistungsschalter Q3 UQ3, und am Ausgang des Kondensatorauslösers Uimp, jeweils über 100x- bzw. 1000x-Tastköpfe, mitgemessen. Dazu wird ein Transientenrekorder mit 12-bit Auflösung und einer maximalen Abtastrate von 1 Million Messpunkte je Sekunde verwendet.

Die Einspeisung 21 in das Prüffeld gemäß FIG 4 erfolgt von einem 3-Phasen-Transformator mit nachgeschalteten Hg-Dampf-Gleichrichtern. Die Leerlaufspannung zeigt deshalb eine Welligkeit von ca. 15% mit einer Periode von 3,333 ms. Als DC Spannung wird im Folgenden der Effektivwert (rms - Wert) der Leerlaufspannung verwendet.

Der bei DC 900 V maximal erreichbare Kurzschluss-Strom liegt bei ca. 150 kA. Fig. 5 zeigt Stromeinstellungsmessungen (Kalibrierkurven) für drei unterschiedliche Kurzschluss-Ströme Ik (150kA, 75 kA, 25 kA). Der maximal erreichbare Stromanstieg di/dt liegt für Ik = 150 kA bei 15,7 kA/ms. Diese Werte sind mit einem satten Kurzschluss am Eingang zum Prüffeld gemessen. Durch den zu testenden Aufbau erhöht sich der Widerstand und die Induktivität des Kreises, so dass sich Ik und di/dt verringern.

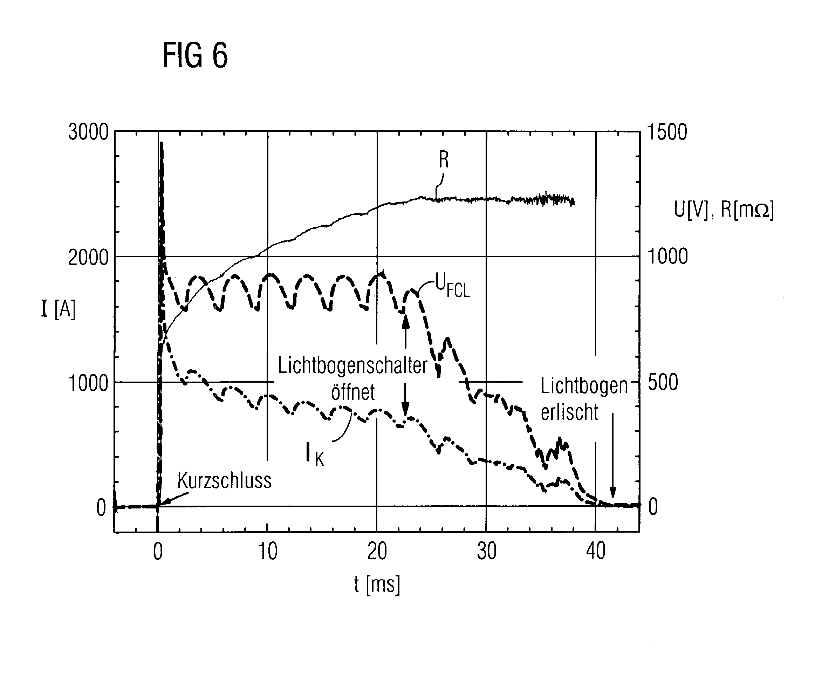

Das typische Schaltverhalten des HTS-Strombegrenzers 30 wird anhand einer Messung mit Urms = 925 V und einem prospektiven Kurzschluss-Strom Ik,prosp. = 150 kA dargestellt. Fig. 6 zeigt den gesamten Zeitraum von Beginn des Kurzschlusses (t = 0 ms) über das Öffnen des Leistungsschalters (t = 22,5 ms) bis zum Verlöschen des Lichtbogens (t = 41 ms). Die Spannung UFCL am HTS-Strombegrenzer 30 zeigt deutlich die Restwelligkeit des Gleichrichters. Im Stromverlauf Ik ist diese Welligkeit von einer fallenden Tendenz überlagert: nach ca. 5 ms wird der Strom von 1000 A unterschritten und der vom Leistungsschalter Q3 abzuschaltende Strom liegt bei knapp 700 A. Der Widerstand R des HTS-Strombegrenzers 30 steigt zunächst sprunghaft, danach stetig weiter an, bis der Schalter Q3 öffnet, und bleibt bei ca. 1,25 Ω nahezu konstant, während im Leistungsschalter Q3 ein Lichtbogen brennt. Nach Verlöschen des Lichtbogens wird keine Energie mehr im HTS-Strombegrenzer 30 umgesetzt und er kühlt innerhalb weniger Sekunden zurück auf Betriebstemperatur. Jetzt ist der HTS-Strombegrenzer 30 und damit die Schaltanlage wieder einsatzbereit.

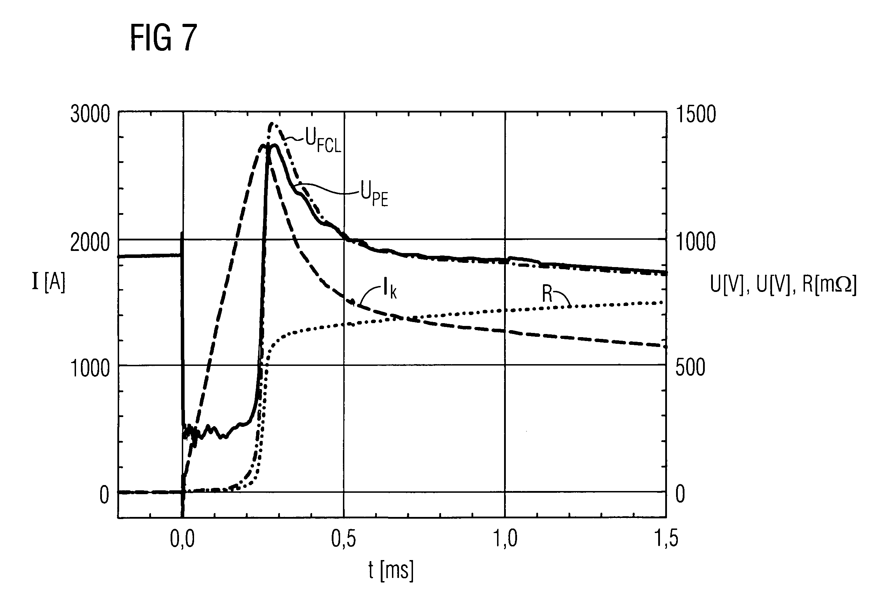

Der Beginn des Begrenzungsvorganges ist in FIG. 7 dargestellt. Ab t = 0 beginnt der Strom mit ca. 12 kA/ms anzusteigen. Erst kurz vor Erreichen des Durchlass-Stroms von 2730 A beginnen auch die Spannung UFCL und der Widerstand R anzusteigen. Innerhalb weniger als 0,1 ms steigt der Widerstand R auf ca. 0,6 Ω an; dieser Wert entspricht dem Widerstand der HTS-Elemente knapp oberhalb der kritischen Temperatur von 88 K. Die Spannung erreicht als Spitzenwert den 1,5-fachen Wert der Bemessungsspannung und liegt nach 0,5 s wieder unter 1000V. Der Kurzschlusstrom Ik wird in 0,25 ms auf weniger als das dreifache des Nennstromes bzw. Dauerbemessungsstromes des HTS-Strombegrenzers begrenzt und fällt danach deutlich ab. Aufgrund der schnellen Begrenzung auf Werte unterhalb des Nennstroms ist auch der Spannungseinbruch an der Quelle sehr kurz. Wie der Verlauf der Spannung UPE am Prüffeldeingang zeigt, dauert er bei obigem Beispiel nur ca. 0,25 ms.

### Vergleichsmessung mit einer Sollschmelzstelle

Zum Vergleich mit dem HTS-Strombegrenzer 30 wird als Vertreter der konventionellen Möglichkeiten zur Strombegrenzung im Bereich von prospektiven Kurzschlussströmen über 100 kA eine Sollschmelzstelle SSS bei DC 600 V und Ik,prosp. ca. 140 kA getestet. Dazu wird der Ausgang des Prüfgerüstes 20 mit einer Kurzschlussschiene 31 überbrückt, vergl. auch FIG. 4. Der Versuch wird mit einer für DC 300 V bemessenen Sollschmelzstelle bei DC 600Vrms durchgeführt, da keine Sollschmelzstellen für höhere Spannungen verfügbar sind.

FIG. 8 zeigt den Stromverlauf ohne (Ik,prosp, punktiert) und mit Sollschmelzstelle (I, durchgezogene Linie). Nach dem Schmelzen der Sollschmelzstelle (ca. 95 kA) steigt die Spannung Usss an der Sollschmelzstelle an und nach weiteren ca. 8 ms öffnet der Leistungsschalter (siehe Spannung ULS am Leistungsschalter). Die Spannungsspitze am Leistungsschalter liegt beim 2.5-fachen der DC Spannung.

Der Begrenzungsvorgang ergibt sich aus dem mit dem Schmelzen der Sollschmelzstelle entstehenden Lichtbogen mit zugehörigem Geräusch und Gasen aus dem Schmelzvorgang.

## Patentansprüche

1. Kurzschluss-Strom-Schutzsystem (40) für elektrische DCund AC-Netze von Schiffen und Offshore-Anlagen, mit
- einem von dem Kurzschlusstrom durchflossenen Hochtemperatur-Supraleiter (HTS)-Strombegrenzer (1),
- einem Kryostat zur Aufnahme und Kühlung des HTS-Strombegrenzers (1) und
- einem Refrigerator (10,17) zur Rekondensation von in dem Kryostat vorhandenen gasförmigem Kältemittel
**dadurch gekennzeichnet, dass**
das System (40) hinsichtlich Funktion und Struktur für Schiffe und Offshore-Plattformen tauglich ausgebildet ist und Mittel zur elektrischen, verfahrenstechnischen und mechanischen Integration in die Schiffe und Offshore-Anlagen aufweist.

2. Kurzschluss-Strom-Schutzsystem (40) nach Anspruch 1,
**dadurch gekennzeichnet, dass** das System als elektrisch, verfahrenstechnisch und mechanisch in Schiffe und/oder Offshore- Plattformen integrierbare Vormontage-Baueinheit ausgebildet ist.

3. Kurzschluss-Strom-Schutzsystem (40) nach Anspruch 2,
**dadurch gekennzeichnet, dass** die Vormontage-Baueinheit einen Schaltschrank oder eine Schalttafel (11) umfasst, in dem bzw. der der Hochtemperatur-Supraleiter (HTS)-Strombegrenzer (1), der Kryostat und der Refrigerator (10,17) angeordnet sind.

4. Kurzschluss-Strom-Schutzsystem (40) nach einem der vorhergehenden Ansprüche,
**dadurch gekennzeichnet, dass** das System (40) einen elektrisch in Reihe zu dem HTS-Strombegrenzer (1) angeordneten Leistungsschalter (5) zur Abschaltung des Kurzschluss-Stromes bei einem Auslösen des HTS-Strombegrenzers (1) aufweist.

5. Kurzschluss-Strom-Schutzsystem (40) nach einem der vorhergehenden Ansprüche
**dadurch gekennzeichnet, dass** das System (40) eine auf die Kurzschluss-Strom-Begrenzung in elektrischen DC- und AC-Netzen von Schiffen und Offshore-Anlagen optimierte Strom-Zeit-Charakteristik aufweist.

6. Kurzschluss-Strom-Schutzsystem (40) nach Anspruch 5,
**dadurch gekennzeichnet, dass** der Hochtemperatur-Supraleiter (HTS)-Strombegrenzer (1) den Kurzschlussstrom innerhalb einer Millisekunde auf maximal den dreifachen Nennstrom des Strombegrenzers (1) begrenzt.

7. Kurzschluss-Strom-Schutzsystem (40) nach einem der vorhergehenden Ansprüche
**dadurch gekennzeichnet, dass** der Hochtemperatur-Supraleiter (HTS)-Strombegrenzer (1) als Hochtemperatur-Supraleiter eine Dünnschicht aus Yttrium Barium Copper Oxide (YBCO) aufweist.

8. Kurzschluss-Strom-Schutzsystem (40) nach Anspruch 7,
**dadurch gekennzeichnet, dass** die Dünnschicht auf einen Plattenleiter aufgebracht ist.

9. Kurzschluss-Strom-Schutzsystem (40) nach Anspruch 7,
**dadurch gekennzeichnet, dass**
dass die Dünnschicht auf einen Bandleiter aufgebracht ist.
